(19) Europäisches Patentamt / European Patent Office / Office européen des brevets

(11) **EP 2 691 742 B1**

(12) **FASCICULE DE BREVET EUROPEEN**

(45) Date de publication et mention de la délivrance du brevet:
**18.03.2020 Bulletin 2020/12**

(21) Numéro de dépôt: **12720233.1**

(22) Date de dépôt: **29.03.2012**

(51) Int Cl.:
*G01D 5/02* (2006.01)    *G01D 5/14* (2006.01)
*B81B 7/00* (2006.01)

(86) Numéro de dépôt international:
**PCT/FR2012/050682**

(87) Numéro de publication internationale:
**WO 2012/172204 (20.12.2012 Gazette 2012/51)**

(54) **SYSTEME DE MESURE A RESONATEURS ELECTROMECANIQUES, PROCEDE DE FABRICATION D'UN TEL SYSTEME ET PROCEDE DE LECTURE D'AU MOINS DEUX RESONATEURS ELECTROMECANIQUES**

MESSSYSTEM MIT ELEKTROMECHANISCHEN RESONATOREN, VERFAHREN ZUR HERSTELLUNG EINES SOLCHEN SYSTEMS UND VERFAHREN ZUM LESEN VON MINDESTENS ZWEI RESONATOREN

MEASURING SYSTEM HAVING ELECTROMECHANICAL RESONATORS, METHOD FOR MANUFACTURING SUCH A SYSTEM, AND METHOD FOR READING AT LEAST TWO RESONATORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2011 FR 1152774**

(43) Date de publication de la demande:
**05.02.2014 Bulletin 2014/06**

(73) Titulaire: **Commissariat à l'Énergie Atomique et aux Énergies Alternatives 75015 Paris (FR)**

(72) Inventeurs:
• **COLINET, Eric**
**F-76230 Bois-Guillaume (FR)**
• **ANDREUCCI, Philippe**
**F-38430 Moirans (FR)**
• **DURAFFOURG, Laurent**
**F-38500 Voiron (FR)**
• **HENTZ, Sébastien**
**F-38760 Varces Allières et Risset (FR)**

(74) Mandataire: **Bonnet, Michel**
**Cabinet Bonnet**
**93, rue Réaumur - Boîte 10**
**75002 Paris (FR)**

(56) Documents cités:
**US-A1- 2002 026 224    US-A1- 2009 199 638**

• **A.M.K. DAGAMSEH ET AL: "Towards high-resolution flow cameras made of artificial hair flow-sensors for flow pattern recognition", 2011 IEEE 24TH INTERNATIONAL CONFERENCE ON MICRO ELECTRO MECHANICAL SYSTEMS, 1 janvier 2011 (2011-01-01), pages 648-651, XP055012057, DOI: 10.1109/MEMSYS.2011.5734508 ISBN: 978-1-42-449632-7**

**Description**

La présente invention concerne un système de mesure à résonateurs électromécaniques, un procédé de fabrication d'un tel système et un procédé de lecture d'au moins deux résonateurs électromécaniques.

L'invention s'applique plus particulièrement dans les domaines des capteurs de gaz, de masse spectrométrique, et dans le domaine des bolomètres.

Dans le cadre de la présente invention, un microsystème électromécanique (ou MEMS, de l'anglais « Micro Electro Mechanical Systems ») est défini comme un système utilisant l'électricité comme source d'énergie et comprenant une structure mécanique dont la forme assure au moins en partie une fonction de capteur et/ou d'actionneur, la structure mécanique présentant des dimensions micrométriques, c'est-à-dire inférieures à un millimètre.

Un nanosystème électromécanique (ou NEMS, de l'anglais « Nano Electro Mechanical Systems ») est similaire à un MEMS, si ce n'est que sa structure mécanique présente des dimensions nanométriques, c'est-à-dire inférieures à un micromètre.

Les systèmes électromécaniques de mesure comportent usuellement des résonateurs électromécaniques, c'est-à-dire des dispositifs présentant un fonctionnement liant un mouvement mécanique avec un fonctionnement électrique. Ces dispositifs sont destinés à recevoir un signal d'excitation (mécanique ou électrique) et à fournir en réponse un signal de sortie (généralement électrique), ce dernier dépendant également d'une grandeur physique à laquelle le résonateur électromécanique est soumis. Ces dispositifs présentent une fonction de transfert comportant généralement un pic de résonance pour une certaine fréquence de résonance, cette fréquence de résonance variant en même temps que la grandeur physique. Dans la suite, on parlera de fréquence de résonance à vide pour désigner la fréquence de résonance présentée par le résonateur électromécanique en l'absence de la grandeur physique à mesurer.

Des résonateurs électromécaniques souvent utilisés sont des résonateurs MEMS ou bien des résonateurs NEMS.

Suivant l'application, un réseau de plusieurs centaines voire plusieurs milliers de résonateurs NEMS peut être nécessaire.

La demande de brevet publiée sous le numéro FR 2 942 681 A1 propose un adressage individuel de chaque résonateur NEMS à l'aide d'une technique d'interconnexion appropriée. Cette approche présente l'avantage de pouvoir réaliser une lecture individualisée de chaque résonateur NEMS, ainsi qu'un traitement électronique individualisé pour chaque structure et ainsi permettre par exemple de compenser les incertitudes de fabrication, d'assurer une meilleure décorrélation des sources de bruit affectant la mesure.

Cependant, un résonateur NEMS présente au moins deux plots d'interconnexion avec son électronique de lecture. De ce fait, en considérant à titre d'exemple mille résonateurs NEMS à interroger individuellement, il se pose un problème technologique important puisqu'il faut alors réaliser au moins deux mille interconnexions. Pour certaines applications, par exemple l'application à des bolomètres à base de résonateurs NEMS ou bien l'application à la détection de masse spectrométrie telle que celle présentée dans l'article de la revue Nature Nanotechnologie : « Towards single-molecule nanomechanical mass spectrometry » publié en ligne le 21 juin 2009 (DOI: 10.1038/NNANO.2009.152) de Naik et al, il est absolument indispensable de disposer d'une matrice hyperdense de plus de 100 000 résonateurs NEMS pour améliorer les performances du système. Le problème d'interconnexion est donc d'autant plus important pour ces systèmes.

Outre la problématique de réalisation technologique des interconnexions, il se pose également le problème de la réalisation d'une électronique de lecture individuelle pour chaque résonateur NEMS. En effet, si l'on considère une démarche d'intégration où la couche électronique est positionnée en dessous de la couche de résonateurs NEMS et où chaque résonateur NEMS occupe une surface de 5 $\mu$m x 5 $\mu$m (taille caractéristique d'un résonateur NEMS avec ses plots interconnexions), l'électronique de lecture devra occuper une surface inférieure à 25 $\mu$m$^2$. Avec les technologies actuelles CMOS, concevoir une électronique capable d'assurer un suivi dynamique de l'évolution de la fréquence du résonateur NEMS tout en remplissant cette contrainte de surface est quasi-impossible.

Il peut ainsi être souhaité de prévoir un système électromécanique de mesure qui permette de s'affranchir d'au moins une partie des problèmes et contraintes précités.

La demande de brevet US publiée sous le numéro US 2002/026224 A1 décrit des capteurs médicaux destinés à être implantés dans le corps humain.

L'article de Dagamseh et al. intitulé « Towards high-resolution flow cameras made of artificial hair flow-sensor for flow patern recognition », publié dans 2011 IEEE 24th International conférence on micro electro mechnical systems, 1er janvier 2011, pages 648-651 décrit des capteurs comportant chacun un cheveu artificiel et deux électrodes reliées à la base du cheveu de sorte que le mouvement de ce dernier entraîne une variation de la capacité entre les électrodes.

La demande de brevet US publiée sous le numéro US 2009/199638 A1 décrit un système de mesure selon le préambule des revendications 1 et 4.

L'invention a donc pour objet un système de mesure à résonateurs électromécaniques selon la revendication 1 et selon la revendication 4.

Grâce à l'invention et moyennant un choix judicieux des différentes fréquences de résonance à vide, il est possible d'interconnecter en parallèle les sorties des résonateurs électromécaniques, c'est-à-dire de connecter ensemble ces sorties, tout en étant toujours capable de distinguer le signal de sortie propre à chaque résonateur électromécanique. Ainsi, l'invention permet d'obtenir un système de mesure avec un nombre réduit de connexions.

Des caractéristiques optionnelles du système de mesure sont énoncées dans les revendications 2 à 3 et 5 à 10.

L'invention a également pour objet un procédé de fabrication d'un système de mesure tel que défini ci-dessus, selon la revendication 11.

L'invention a également pour objet un procédé de lecture d'au moins deux résonateurs électromécaniques d'un système de mesure tel que défini ci-dessus, selon la revendication 12.

Des caractéristiques optionnelles du procédé de lecture sont énoncées dans la revendication 13.

L'invention sera mieux comprise à l'aide de la description qui va suivre, donnée uniquement à titre d'exemple et faite en se référant aux dessins annexés dans lesquels :

- la figure 1 est un schéma simplifié d'un premier système électromécanique de mesure mettant en œuvre l'invention,
- la figure 2 est un schéma simplifié d'un réseau de résonateurs électromécaniques du système de la figure 1,
- la figure 3 est une photographie d'un résonateur électromécanique du réseau de la figure 2,
- la figure 4 est un schéma simplifié des connexions des résonateurs électromécaniques du réseau de la figure 2,
- les figures 5 à 14 sont des graphes illustrant des caractéristiques du réseau de résonateurs électromécaniques de la figure 2.
- la figure 15 est un schéma simplifié d'un deuxième système électromécanique de mesure mettant en œuvre l'invention,
- la figure 16 est un schéma simplifié d'un réseau de résonateurs électromécaniques pouvant être utilisé dans le système de la figure 1 ou de la figure 15,
- la figure 17 est un schéma simplifié d'un réseau de résonateurs électromécaniques pouvant être utilisé dans le système de la figure 1 ou de la figure 15,
- la figure 18 est un schéma simplifié d'un troisième système électromécanique de mesure mettant en œuvre l'invention, et
- la figure 19 est un schéma simplifié d'un quatrième système électromécanique de mesure mettant en œuvre l'invention.

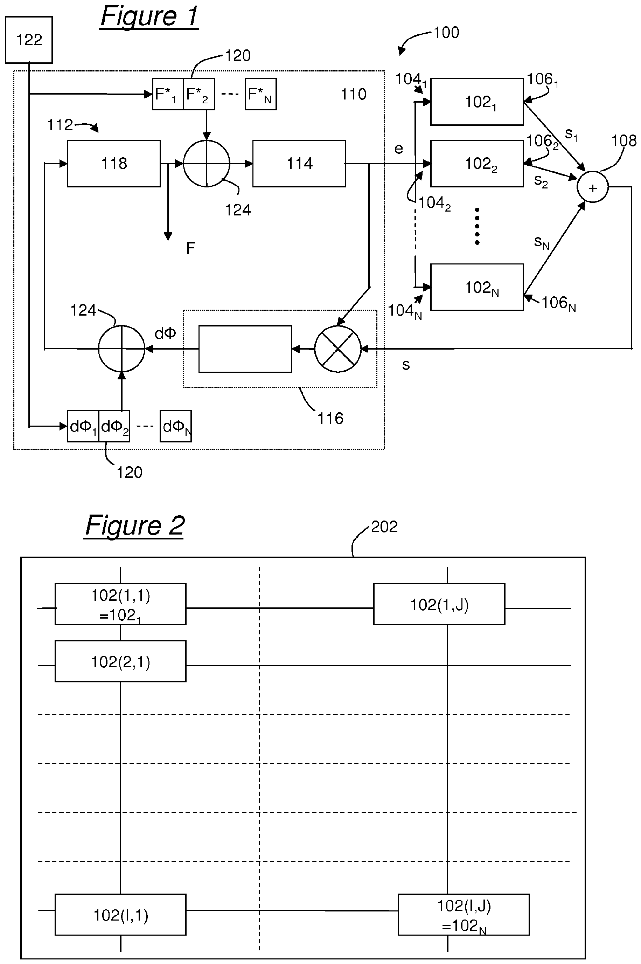

En référence à la figure 1, un exemple de système électromécanique de mesure 100 mettant en œuvre l'invention comporte tout d'abord un réseau de résonateurs électromécaniques $102_1...102_N$. Dans l'exemple décrit, il s'agit de résonateurs NEMS.

Chaque résonateur NEMS $102_1...102_N$ est munie d'une entrée d'excitation $104_1...104_N$ et d'une sortie $106_1...106_N$. Chaque résonateur NEMS $102_1...102_N$ est conçu pour fournir un signal de sortie $s_1...s_N$ sur sa sortie $106_1...106_N$ en réponse à un signal d'excitation e appliqué sur son entrée d'excitation $104_1...104_N$. Chaque résonateur NEMS $102_1...102_N$ présente en outre une fréquence de résonance $F_1...F_N$ variant autour d'une fréquence de résonance à vide $F^*_1...F^*_N$ en fonction d'une grandeur physique à mesurer. Ainsi, pour chaque résonateur NEMS $102_1...102_N$, le signal de sortie $s_1...s_N$ correspond au signal d'excitation qui lui est appliqué, amplifié de manière importante autour de la fréquence de résonance $F_1...F_N$. Les fréquences de résonance à vide $F^*_1...F^*_N$ sont différentes les unes des autres. « différentes » signifie que chaque fréquence de résonance à vide $F^*_1...F^*_N$ est espacée de sa voisine inférieure d'au moins 1% de sa valeur. Par exemple, si un résonateur électromécanique présente une fréquence de résonance à vide $F^*_i$ de 1 MHz, l'écart avec la fréquence de résonance à vide précédente $F^*_{i-1}$ est d'au moins 10 kHz.

Le système 100 comporte en outre un dispositif 108 de sommation des signaux de sortie $s_1...s_N$ en un signal total de sortie s.

Le système 100 comporte en outre un dispositif 110 de lecture des résonateurs NEMS $102_1...102_N$, conçu pour sélectivement déterminer les fréquences de résonance $F_1...F_N$ des MEMS $102_1...102_N$ à partir du signal total de sortie s.

Dans l'exemple décrit, le dispositif de lecture 110 est conçu pour fournir le signal d'excitation e et il est connecté à toutes les entrées d'excitation $104_1...104_N$, afin de fournir le signal d'excitation e sur toutes les entrées d'excitation $104_1...104_N$ en même temps

Dans l'exemple décrit, le dispositif de lecture 110 comporte un circuit de boucle à phase asservie 112 conçu pour caler la fréquence F du signal d'excitation e sur la fréquence d'un pic de résonance du signal total de sortie s et pour fournir, en tant que fréquence de résonance déterminée, la fréquence calée.

A cet effet, le circuit à boucle de phase asservie 112 comporte un oscillateur contrôlé en tension 114 qui est contrôlé par une tension F et connecté aux entrées $104_i...104_N$ des résonateurs NEMS $102_1...102_N$ pour leur fournir le signal d'excitation e qui est périodique et monofréquentiel de fréquence correspondant à la tension F. Dans la suite de la description, la tension F sera confondue avec la fréquence du signal d'excitation e.

Le circuit à boucle de phase asservie 112 comporte en outre un comparateur de phase 116 connecté au dispositif de sommation 108 pour recevoir le signal total de sortie s et conçu pour déterminer et fournir un déphasage $d\Phi$ entre le signal total de sortie s et le signal d'excitation e.

Le circuit à boucle de phase asservie 112 comporte en outre un contrôleur 118 connecté au comparateur de phase 116 et conçu pour déterminer et fournir la tension F à l'oscillateur contrôlé en tension 114 à partir du déphasage $d\Phi$.

Le dispositif de lecture 110 comporte en outre une mémoire 120 dans laquelle sont enregistrés, d'une part, les fréquences de résonance à vide $F^*_1...F^*_N$ des résonateurs NEMS $102_1...102_N$ et d'autre part, un déphasage initial $d\Phi_1...d\Phi_N$ pour chaque résonateur NEMS $102_1...102_N$.

Le dispositif de lecture 110 comporte en outre des moyens 122 de sélection de chacune des fréquences de résonance à vide $F^*_1...F^*_N$ enregistrées et de chacun des déphasages initiaux $d\Phi_1...d\Phi_N$ enregistrés.

En outre, le circuit à boucle de phase asservie 112 comporte des moyens 124 de démarrage du calage à la fréquence de résonance à vide et au déphasage initial sélectionnés par les moyens 122.

En référence à la figure 2, dans l'exemple décrit, le réseau de résonateurs NEMS $102_1...102_N$ est constitué de NEMS $102_1...102_N$ à actionnement capacitif et détection piézorésistive et gravés sur une même puce de silicium 202. Les résonateurs NEMS $102_1...102_N$ sont par exemple organisés en une matrice de IxJ=N résonateurs NEMS.

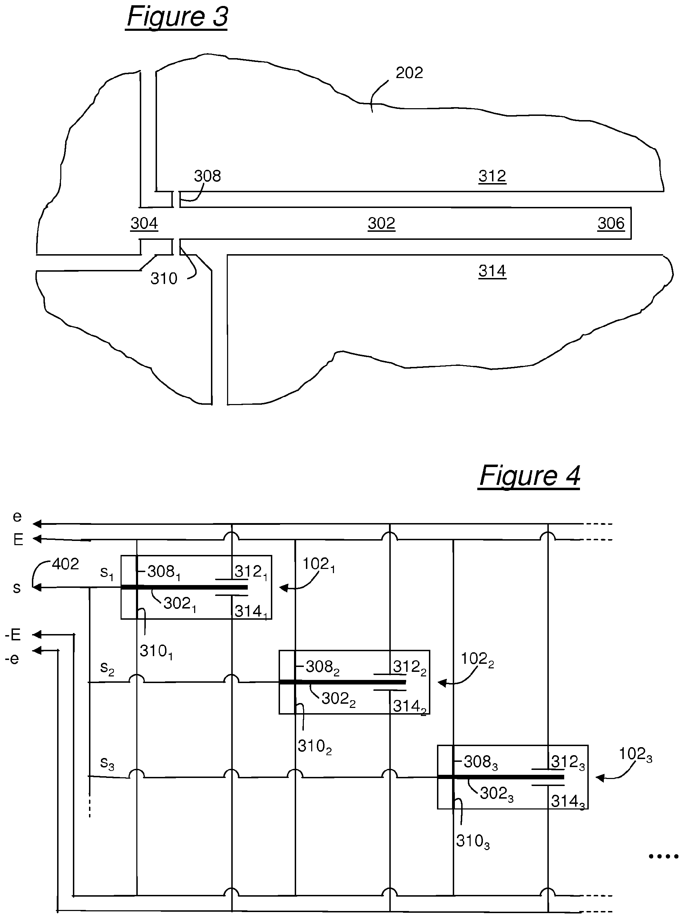

En référence à la figure 3, chaque résonateur NEMS du réseau comporte une poutre 302 présentant une première extrémité encastrée 304 et une seconde extrémité libre 306. Chaque résonateur NEMS comporte en outre, à proximité de l'extrémité encastrée 304, deux jauges de contrainte 308, 310 en matériau piézorésistif disposées de part et d'autre de la poutre 302. Chaque résonateur NEMS comporte en outre deux électrodes 312, 314 d'actionnement de la poutre 302, disposées de part et d'autre de cette dernière. De tels résonateurs NEMS ont pour but de mesurer le poids d'un gaz ambiant et sont capables de mesurer des ajouts de masse de l'ordre de $10^{-21}$ grammes soit 1 zeptogramme.

En référence à la figure 4, les deux jauges de contrainte 308, 310 des résonateurs NEMS $102_1...102_N$ sont connectées respectivement à des potentiels constants E et -E. En outre, les extrémités encastrées 304 des poutres des résonateurs NEMS fournissent les signaux de sortie $s_1...s_N$ et sont toutes connectées par des connexions à un même nœud 402 fournissant le signal total de sortie s, et définissant ainsi un unique bus de transfert d'informations. Ces connexions et ce nœud 402 forment ainsi les moyens de sommation 108. Par ailleurs, les deux électrodes 312, 314 des résonateurs NEMS $102_1...102_N$ sont connectées respectivement ensemble et reçoivent respectivement le signal d'excitation e et son opposée -e. A nouveau, cette configuration définit un seul bus d'excitation.

Dans l'exemple décrit, les poutres $302_1...302_N$ ont des longueurs $L_1...L_N$ différentes les unes des autres, leurs autres caractéristiques géométriques étant identiques. Or, la fréquence de résonance à vide $F^*_n$ (n = 1...N) de chaque résonateur NEMS $102_1... 102_N$ est définie de la manière suivante :

$$F^*_n \frac{1}{2\pi}\sqrt{\frac{EI}{\rho s}}\cdot\left(\frac{2.1178}{L_n}\right)^2 \text{ avec } I = \frac{w^3 e}{12} \text{ et } s = w \cdot e,$$

où E est le module de Young du matériau constituant le résonateur NEMS, 'rho' sa masse volumique, I son moment d'inertie du résonateur, s sa section, w sa largeur vibrante, e son épaisseur.

Ainsi, les résonateurs NEMS $102_1...102_N$ présentent bien des fréquences de résonance à vide $F^*_1...F^*_N$ différentes les unes des autres.

Le dimensionnement des résonateurs NEMS $102_1...102_N$ est réalisé en déterminant, pour chaque résonateur NEMS, un intervalle de variation maximale de fréquence de résonance attendue et en choisissant des structures mécaniques (dans l'exemple décrit, des longueurs de poutre) définissant des fréquences de résonance à vide suffisamment écartées les unes des autres pour que les intervalles déterminés ne se chevauchent pas. Des marges supplémentaires sont en outre de préférence prises pour tenir compte de possibles dispersions de fabrication.

Avec un tel dimensionnement, il devient possible de séparer convenablement les informations des NEMS résonateurs $102_1...102_N$ du réseau.

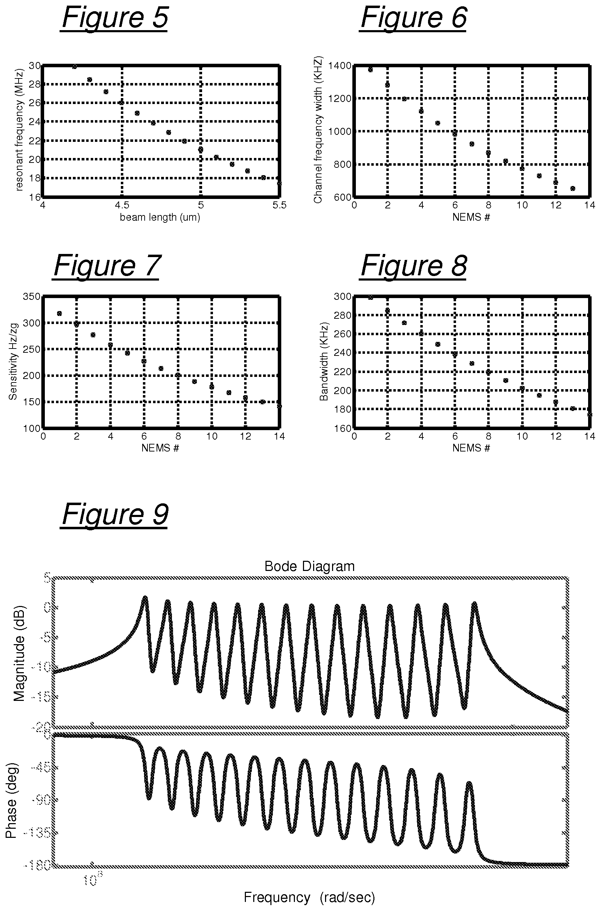

Les figures 5 à 9 illustrent le cas de quatorze résonateurs NEMS dont la longueur des poutres varie de 4.2 mm à 5.5 $\mu$m par pas de 100 nm, et avec w = 300 nm et e = 160 nm.

La figure 5 illustre les fréquences de résonance à vide (« resonant frequency ») en fonction de la longueur de la poutre (« beam length »).

La figure 6 illustre la largeur du canal d'écoute (« channel frequency width »), c'est-à-dire l'écart entre deux fréquences de résonance successives en fonction du résonateur NEMS considéré (« NEMS # »).

La figure 7 illustre la sensibilité (« sensivity ») en hertz par zeptogramme de chaque résonateur NEMS (« NEMS # »), dans le cas où ces derniers sont utilisés en tant que capteurs de masse.

La figure 8 illustre la bande passante (« bandwidth ») pour chaque résonateur NEMS (« NEMS # »), la bande passante étant définie par F*/Q, où F* est la fréquence de résonance à vide du résonateur NEMS et Q un facteur de qualité du résonateur NEMS.

La figure 9 illustre diagramme de Bode (« Bode diagram ») de ce réseau de quatorze résonateurs NEMS, c'est-à-dire l'amplitude spectrale (« magnitude ») et la phase spectrale (« phase ») en fonction de la fréquence (« frequency »).

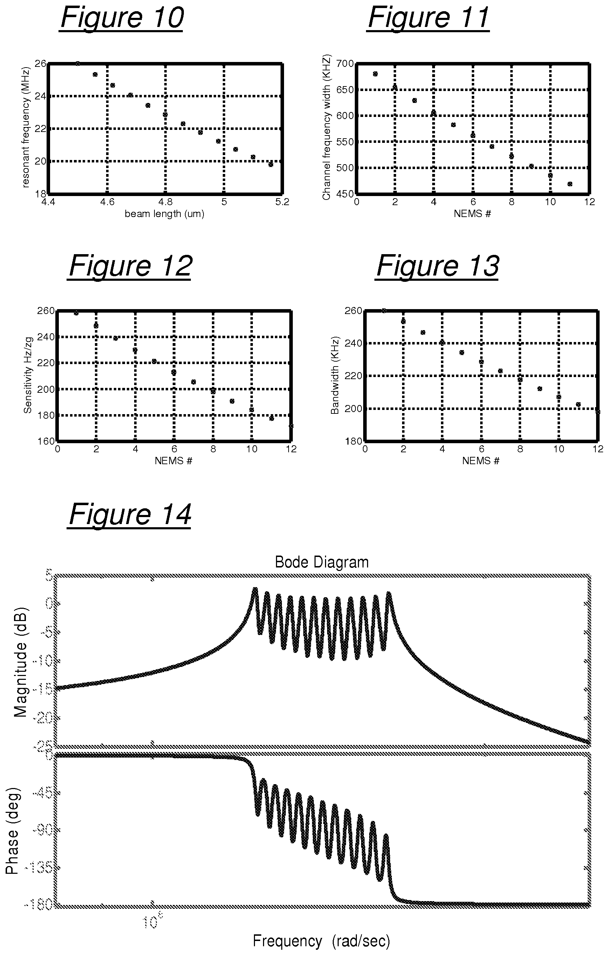

Les figures 10 à 14 sont des figures identiques aux figures 5 à 9 dans le cas de quatorze résonateurs NEMS dont la longueur des poutres varie de 4.5 mm à 5.2 $\mu$m par pas de 60 nm, et avec w = 300 nm et e = 160 nm.

On va à présent décrire le fonctionnement du système 100.

Au cours d'une opération de calibration, les fréquences de résonance à vide $F^*_1...F^*_N$ et les déphasages initiaux $d\Phi_1...d\Phi_N$ sont déterminés par exemple en balayant en boucle ouverte l'espace des fréquences avec l'oscillateur contrôlé en tension 114. Ces données sont ensuite enregistrées dans la mémoire 120.

En fonctionnement, au cours d'une opération de lecture du résonateur NEMS $102_n$, les moyens de sélection 122 sélectionnent la fréquence de résonance à vide $F^*_N$ et le déphasage initial $d\Phi_n$ correspondant au résonateur NEMS $102_n$ dont la lecture est souhaitée. Les moyens de démarrage 124 injectent alors ces valeurs dans la boucle de phase asservie 112, de manière à assurer l'accrochage de la boucle de phase asservie 112 à la fréquence de résonance du résonateur NEMS $102_n$. Ainsi, au bout d'un temps de calage généralement de l'ordre de 50 $\mu$s, la fréquence calée F correspond à la fréquence de résonance du résonateur NEMS $102_n$.

L'opération de lecture est alors répétée pour les autres résonateurs NEMS, ce qui permet de tous les lire un par un.

Par la suite, la grandeur physique dont la mesure est recherchée par la lecture du résonateur électromécanique, est déterminée à partir de la fréquence de résonance et de la fréquence de résonance à vide du résonateur électromécanique, par exemple à partir de la différence entre sa fréquence de résonance et sa fréquence de résonance à vide.

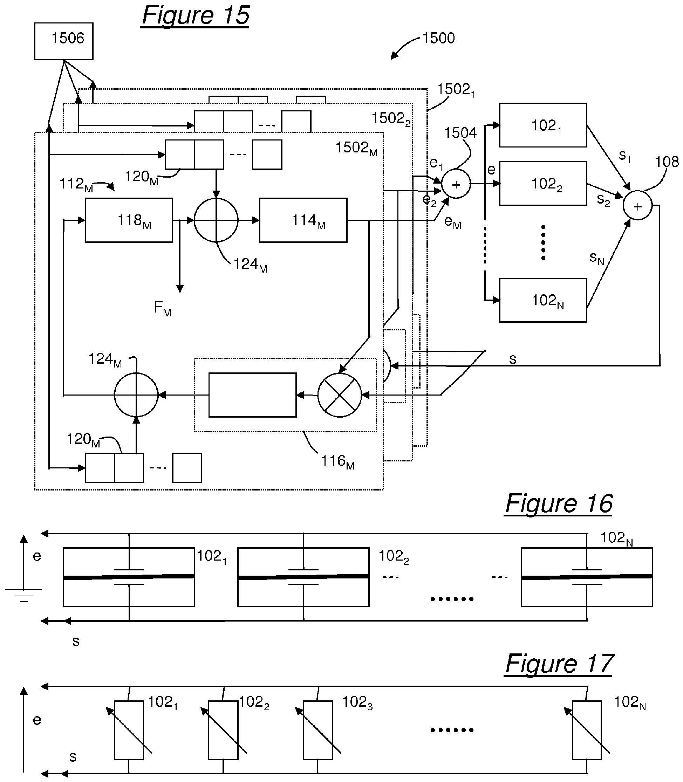

En référence à la figure 15, un second exemple de système électromécanique de mesure 1500 mettant en œuvre l'invention diffère de celui de la figure 1 en particulier par le fait qu'il comporte plusieurs dispositifs de lecture $1502_1...1502_M$, chacun identique au dispositif de lecture 110 de la figure 1 et conçu pour fournir un signal d'excitation $e_1...e_M$ respectif. Les éléments de chaque dispositif de lecture $1502_1...1502_M$ portent les mêmes références que le dispositif de lecture 110, avec en outre un indice 1...M indiquant le dispositif de lecture $1502_1...1502_M$ auquel ils appartiennent.

Le système 1500 comporte en outre des moyens 1504 de sommation des signaux d'excitation $e_1...e_M$ conçus pour fournir un signal total d'excitation e appliqué aux entrées $104_1...104_N$ des résonateurs NEMS $102_1...102_N$. Ainsi, le signal d'excitation $e_1...e_M$ de chaque dispositif de lecture $1502_1...1502_M$ est appliqué aux entrées $104_1... 104_N$ des MEMS $102_1... 102_N$.

En outre, les moyens de sélection 122 de la figure 1 sont remplacés par des moyens de sélection 1506 conçu pour sélectionner, pour chacun des dispositifs de lecture $1502_1...1502_M$, chacune des fréquences de résonance à vide $F^*_1...F^*_N$ enregistrées et de chacun des déphasages initiaux $d\Phi_1...d\Phi_N$ enregistrés, de sorte que chacun des moyens $124_1... 124_M$ soit apte à démarrer le calage à la fréquence de résonance à vide et au déphasage initial sélectionnés pour le dispositif de lecture $1502_i... 1502_M$ correspondant.

Sur la figure 15, chaque dispositif de lecture $1502_1...1502_M$ comporte sa mémoire $120_1...120_M$. Cependant, ces dernières pourraient bien sûr être remplacées par une seule mémoire 120, commune à tous les dispositifs de lecture $1502_1...1502_M$.

Il est ainsi possible de lire jusqu'à M des résonateurs NEMS $102_1...102_N$ en même temps.

On va à présent décrire le fonctionnement du système 1500.

Au cours d'une opération de calibration, les fréquences de résonance à vide $F^*_1...F^*_N$ et les déphasages initiaux $d\Phi_1...d\Phi_N$ sont déterminés par exemple en balayant en boucle ouverte l'espace des fréquences avec l'un des oscillateurs contrôlés en tension $114_m$. Ces données sont ensuite enregistrées dans la ou les mémoires.

En fonctionnement, au cours d'une opération de lecture, les moyens de sélection 1506 sélectionnent, pour chacun des M dispositifs de lecture $1502_1...1502_M$, une fréquence de résonance à vide $F^*_n$ et un déphasage initial $d\Phi_n$ correspondant au résonateur NEMS $102_n$ dont la lecture est souhaitée par le dispositif de lecture considéré. Les moyens de démarrage $124_1...124_M$ de chaque dispositif de lecture $1502_i...1502_M$ injectent alors ces valeurs dans la boucle de phase asservie $112_i...112_M$ correspondante, de manière à assurer l'accrochage de la boucle de phase asservie $112_i...112_M$ à la fréquence de résonance du résonateur NEMS $102_n$.

Les moyens de sommation 1504 fournissent alors le signal d'excitation e, de sorte que chaque résonateur NEMS $102_1...102_N$ reçoit chacun des signaux d'excitation $e_1...e_M$. Ainsi, chacun des résonateurs NEMS dont la fréquence de résonance est proche de la fréquence de l'un des signaux d'excitation $e_1...e_M$ fournit un signal de sortie significatif, les signaux de sortie des autres résonateurs NEMS étant négligeables.

Ainsi, au bout d'un temps de calage généralement de l'ordre de 50 $\mu$s, les fréquences calées $F_1... F_M$ des dispositifs de lectures $1502_1...1502_M$ correspondent aux fréquences de résonance des résonateurs NEMS dont la lecture est souhaitée, c'est-à-dire ceux dont la fréquence de résonance à vide $F^*_n$ et le déphasage initial $d\Phi_n$ ont été sélectionnés par les moyens 1504

Ainsi, plusieurs résonateurs NEMS sont lus en même temps.

L'opération de lecture est alors répétée pour d'autres résonateurs NEMS du réseau, ce qui permet de tous les lire par groupe de M.

Par la suite, la grandeur physique est déterminée à partir de la fréquence de résonance et de la fréquence de résonance à vide de chaque résonateur électromécanique lu, par exemple à partir de la différence entre la fréquence de résonance et la fréquence de résonance à vide.

En référence à la figure 16, dans une variante de réalisation, les résonateurs NEMS $102_1...102_N$ à actionnement capacitif et détection piézorésistive peuvent être remplacés par des résonateurs NEMS à actionnement capacitif et détection capacitive. Chacun des résonateurs NEMS comporte une capacité présentant deux électrodes (appelées respectivement électrode haute et électrode basse) et une poutre disposée entre les électrodes et maintenue à un potentiel continu. Les électrodes hautes sont reliées entre elles et les électrodes basses sont reliées entre elles. Le signal d'excitation e est la tension appliquée sur les électrodes hautes, tandis que le signal de sortie s est le courant induit.

En référence à la figure 17, dans une variante de réalisation, les résonateurs NEMS $102_1...102_N$ à actionnement capacitif et détection piézorésistive peuvent être remplacés par des résonateurs NEMS à actionnement thermo-élastique et détection piézorésistive. Dans ce cas, chaque résonateur NEMS comporte une résistance variable présentant deux bornes (appelées respectivement électrode haute et électrode basse). Les électrodes hautes sont reliées entre elles, les électrodes basses sont reliées entre elles. Le signal d'excitation e est la tension appliquée entre les bornes hautes et basses, tandis que le signal de sortie est le courant induit.

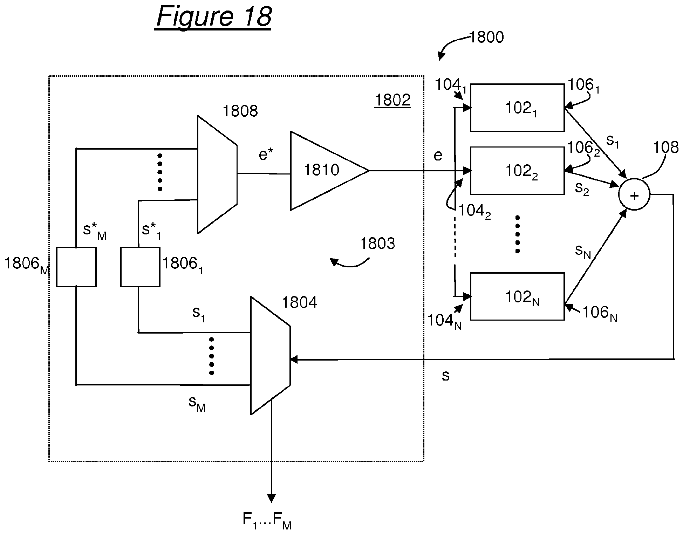

En référence à la figure 18, un troisième système électromécanique de mesure 1800 mettant en œuvre l'invention diffère de celui de la figure 1 en particulier par le fait que le dispositif de lecture, à présent numéroté 1802, comporte plusieurs boucles d'auto-oscillation 1803. Le dispositif de lecture 1802 comporte en particulier un démultiplexeur 1804 recevant le signal total de sortie s, extrayant du signal total de sortie s un nombre M de signaux de sortie $s_1...s_M$. Le démultiplexeur 1804 est en outre conçu pour analyser les signaux de sortie extraits $s_1...s_M$, afin de déterminer leurs fréquences de résonance $F_1...F_M$. Le dispositif comporte des moyens de commande (non représentés) conçus pour indiquer au démultiplexeur 1804 quels signaux doivent être extraits, ces signaux correspondant aux résonateurs électromécaniques dont la lecture est souhaitée. Pour permettre l'extraction des signaux par le démultiplexeur, on pourra par exemple utiliser, pour chaque résonateur sélectionné pour lecture, une information correspondant à une bande passante s'étendant autour de la fréquence de résonance à vide du résonateur considéré et enregistrée dans une mémoire (non représentée). Le dispositif de lecture 1802 comporte en outre M déphaseurs $1806_1...1806_M$, chacun conçu pour déphaser un signal de sortie extrait respectif $s^*_1...s^*_M$, afin d'obtenir un déphasage entrée/sortie nul pour la boucle d'auto-oscillation correspondante. Le dispositif de lecture 1802 comporte en outre un multiplexeur 1808 conçu pour additionner les signaux de sortie extraits $s^*_1...s^*_M$, après qu'ils aient été déphasés, afin de fournir un signal additionné, noté e*. Le dispositif de lecture 1802 comporte en outre un amplificateur 1810 conçu pour recevoir le signal additionné e* afin de fournir le signal d'excitation e. Le signal d'excitation e et le signal de sortie s comportent ainsi, au bout d'un temps initial de mise en auto-oscillation, M pics de fréquences correspondant aux fréquences de résonance des M résonateurs électromécaniques en cours de lecture.

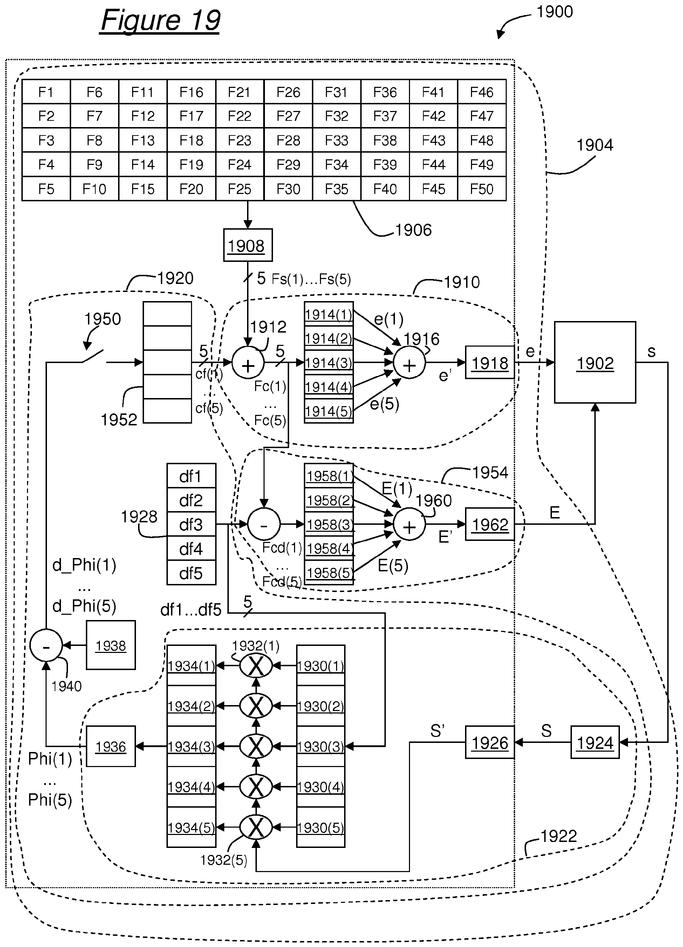

En référence à la figure 19, un quatrième système électromécanique de mesure 1900 va à présent être décrit. Ce quatrième système électromécanique de mesure 1900 présente de nombreuses similitudes avec celui de la figure 15. En particulier, il emploie plusieurs circuits à boucle de phase asservie pour déterminer les fréquences de résonance des résonateurs sélectionnés pour lecture en partant de leurs fréquences de résonance à vide.

Le système électromécanique de mesure 1900 comporte tout d'abord un réseau de résonateurs électromécaniques portant la référence générale 1902. Dans l'exemple décrit, les résonateurs électromécaniques 1902 sont au nombre de cinquante et sont similaires à ceux représentés sur les figures 3 et 4. Comme indiqué précédemment dans la description de ces figures, le même signal d'excitation e et le même signal de polarisation E sont appliqués à chacun des résonateurs 1902. En outre, les sorties - présentant les signaux de sorties locaux notés $s_1$, $s_2$, $s_3$, ... sur la figure 4 - de tous les résonateurs 1902 sont reliées ensemble à une sortie commune (portant la référence 402 sur la figure 4) présentant ainsi un signal de sortie total s. Dans l'exemple décrit, le signal total de sortie s est une tension analogique.

Le système électromécanique de mesure 1900 comporte en outre un système de lecture 1904 destiné à "lire" un ou plusieurs résonateurs sélectionnés parmi les résonateurs 1902, c'est-à-dire à déterminer la fréquence de résonance de ce ou ces résonateurs. Dans l'exemple décrit, le système de lecture 1904 est destiné à lire cinq résonateurs à la fois, et comporte de ce fait cinq circuits à boucle de phase asservie.

Le système de lecture 1904 comporte tout d'abord une mémoire 1906 dans laquelle les fréquences de résonance à vide des résonateurs 1902 sont enregistrées.

Le système de lecture 1904 comporte en outre un dispositif de sélection 1908 destiné à sélectionner dans la mémoire 1906, pour chaque résonateur que le système de lecture 1904 est destiné à lire, la fréquence de résonance à vide du résonateur considéré. Dans l'exemple décrit, les fréquences de résonance à vide sélectionnées sont notées Fs(1)...Fs(5).

Le système de lecture 1904 comporte en outre un système d'excitation 1910 destiné à fournir le signal d'excitation e à chacun des résonateurs 1902, et en particulier aux résonateurs dont la lecture est souhaitée, à partir, d'une part, de la ou des fréquences de résonance à vide sélectionnées Fs(1)...Fs(5) fournies par le dispositif de sélection 1908 et, d'autre part, d'une ou plusieurs corrections de fréquence, notées cf(1)...cf(5) et fournies par un système qui sera décrit plus loin. Le système d'excitation 1910 est ainsi configuré à partir de la ou des fréquences de résonances sélectionnées.

Le système d'excitation 1910 comporte en outre un dispositif de correction de fréquence 1912 destiné à fournir, pour chaque résonateur que le système de lecture 1904 est destiné à lire, une fréquence corrigée fc(1)...fc(5) à partir, d'une part, de la fréquence de résonance à vide Fs(1)...Fs(5) fournie par le dispositif de sélection 1908 et, d'autre part, de la correction de fréquence cf(1)...cf(5) pour le résonateur considéré. Dans l'exemple décrit, le dispositif de correction de fréquence 1912 est un additionneur.

Le système d'excitation 1910 comporte en outre, pour chaque résonateur destiné à être lu par le système de lecture 1904, un dispositif de génération de signal monofréquentiel 1914(1)...1914(5) destiné à générer un signal d'excitation e(1)...e(5) monofréquentiel de fréquence égale à la fréquence corrigée fc(1)...fc(5) pour le résonateur considéré. Dans l'exemple décrit, les dispositifs de génération de signal monofréquentiel 1914(1)...1914(5) sont des oscillateurs commandés numériquement.

Le système d'excitation 1910 comporte en outre un additionneur 1916 destiné à additionner le ou les signaux d'excitation e(1)...e(5) fournis par le ou les dispositifs de génération de signal monofréquentiel 1914(1)...1914(5) en un signal d'excitation numérique e'.

Le système d'excitation 1910 comporte en outre un convertisseur numérique analogique 1918 destiné à convertir le signal d'excitation numérique e' en un signal d'excitation analogique e, ce dernier étant fourni à chacun des résonateurs 1902.

Le système de lecture 1904 comporte en outre un système de correction 1920 destiné à fournir, à partir du signal de sortie total s, pour chaque résonateur destiné à être lu par le système de lecture 1904, la correction de fréquence cf(1)...cf(5) fournie au dispositif de correction de fréquence 1912.

Le système de correction 1920 comporte tout d'abord, pour chaque résonateur destiné à être lu par système de lecture 1904, un dispositif de détermination de déphasage 1922 destiné à déterminer, pour chaque résonateur destiné à être lu par le système de lecture 1904, la phase Phi(1)...Phi(5) du signal de sortie local (références $s_1$, $s_2$, $s_3$, ... sur la figure 4) du résonateur considéré.

Le dispositif de détermination de déphasage 1922 comporte tout d'abord un amplificateur faible bruit 1924 destiné à amplifier le signal de sortie total s de manière à fournir un signal de sortie total amplifié S.

Le dispositif de détermination de déphasage 1922 comporte en outre un convertisseur analogique/numérique 1926 destiné à convertir le signal de sortie total amplifié S en un signal de sortie total amplifié numérique S'.

Le système de correction 1920 comporte en outre une mémoire 1928 dans laquelle sont enregistrées des fréquences df1...df5, d'un nombre égal au nombre de résonateurs que le système de lecture 1904 est destiné à lire. Les fréquences df1...df5 sont choisies de manière arbitraire. Cependant, pour un bon fonctionnement du système de lecture 1904, il nécessaire que l'écart entre les fréquences soit égal à au moins dix fois la fréquence de coupure des filtres 1934 qui seront décrits plus loin. Un tel écart permet par exemple d'éviter un repliement du spectre de fréquence dans la bande de fréquence de travail des filtres 1934. Par exemple, si la fréquence de coupure de ces filtres est de 1 kHz, il est nécessaire que l'écart soit d'au moins 10 kHz. Dans l'exemple décrit, les fréquences enregistrées sont comprises dans l'intervalle s'étendant de 10 kHz à 100 kHz.

Le dispositif de détermination de déphasage 1922 comporte en outre, pour chaque résonateur destiné à être lu par le système de lecture 1904, un oscillateur commandé numériquement 1930(1)...1930(5). Ces oscillateurs sont destinés à recevoir des fréquences respectives df1 ...df5 enregistrées dans la mémoire 1928 et à fournir chacun deux signaux monofréquentiels en quadrature l'un de l'autre, tous les deux à la fréquence df1 ...df5 reçue.

Le dispositif de détermination de déphasage 1922 comporte en outre, pour chaque résonateur que le dispositif de lecture 1904 est destiné à lire, un mélangeur 1932(1)...1932(5) destiné à mélanger les signaux en quadrature avec le signal S'.

Le dispositif de détermination de déphasage 1922 comporte en outre, pour chaque résonateur que le dispositif de lecture 1904 est destiné à lire, un filtre passe-bas 1934(1)...1934(5) destiné à filtrer les signaux fournis par le mélangeur 1932(1)...1932(5) correspondant. Chaque filtre passe-bas fournit ainsi un signal complexe représentant le signal de sortie du résonateur considéré (les signaux de sortie sont référencés $s_1$, $s_2$, $s_3$, ... sur la figure 4).

Le dispositif de détermination de déphasage 1922 comporte en outre un dispositif de calcul de phase 1936 destiné à déterminer, pour chaque résonateur que le dispositif de lecture 1904 est destiné à lire, la phase du signal de sortie correspondant à ce résonateur. Dans l'exemple décrit, le dispositif de calcul de phase 1936 est ainsi destiné à fournir cinq phases notées Phi(1)...Phi(5).

Le système de correction 1920 comporte en outre une mémoire 1938 dans laquelle les phases à la résonance à vide de chaque résonateur sont enregistrées.

Le système de correction 1920 comporte en outre un comparateur 1940 destiné, pour chaque résonateur que le dispositif de lecture 1904 est destiné à lire, à comparer la phase Phi(1)...Phi(5) déterminée par le dispositif de détermination de phase 1922, avec la phase à la résonance à vide enregistrée dans la mémoire pour le résonateur considéré et à fournir le déphasage d_Phi(1)...d_Phi(5) résultant de la comparaison. Dans l'exemple décrit, le comparateur 1940 est un soustracteur.

Le système de correction 1920 comporte en outre un échantillonneur 1950 destiné à re-échantillonner les déphasages d_Phi(1)...d_Phi(5) fournis afin de diminuer la fréquence d'échantillonnage, ce qui permet de simplifier les calculs après l'échantillonneur 1950. Dans l'exemple décrit les déphasages d_Phi(1)...d_Phi(5) sont re-échantillonnés à 100 kilohertz. En effet, à cause de l'imprécision des filtres passe-bas 1934(1)...1934(5), une fréquence d'échantillonnage plus grande n'est pas nécessaire.

Le système de correction 1920 comporte en outre, pour chaque résonateur que le dispositif de lecture 1904 est destiné à lire, un filtre de correction 1952(1)...1952(5) destiné à déterminer la ou les corrections de fréquence cf(1)...cf(5). Dans l'exemple décrit, les filtres de correction 1952(1)...1952(5) sont des filtres passe-bas.

Dans le mode de réalisation de la figure 19, le potentiel de polarisation des résonateurs (noté E sur la figure 4 et toujours noté E sur la figure 19) est cette fois variable. Ainsi, le système de lecture 1904 comporte en outre un système de polarisation 1954 destiné à fournir le potentiel de polarisation E.

Dans l'exemple décrit, le système de polarisation 1954 est destiné à fournir le même potentiel de polarisation E à tous les résonateurs 1902, à partir, d'une part, de la ou des fréquences corrigées fc(1)...fc(5) et, d'autre part, des fréquences df1 ...df5.

Le système de polarisation 1954 comporte tout d'abord un comparateur 1956 destiné à comparer, pour chaque résonateur que le système de lecture 1904 est destiné à lire, la fréquence corrigée et la fréquence df1...df5 qui correspondent au résonateur considéré, et à fournir le résultat de cette comparaison, appelé fréquence corrigée décalée et notée fcd(1)...fcd(5).

Le système de polarisation 1954 comporte en outre, pour chaque résonateur que le système de lecture 1904 est destiné à lire, un générateur 1958(1)...1958(5) d'un signal local de polarisation E(1)...E(5) présentant une fréquence égale à la fréquence corrigées décalée fcd(1)...fcd(5) du résonateur considéré.

Le système de polarisation 1954 comporte en outre un additionneur 1960 destiné à additionner le ou les signaux locaux de polarisation E(1)...E(5) pour fournir un signal de polarisation E' sous forme numérique.

Le système de polarisation 1954 comporte en outre un convertisseur numérique/analogique 1962 destiné à convertir le signal de polarisation numérique E' en signal de polarisation analogique E qui est appliqué à chacun des résonateurs 1902.

Tous les éléments décrits précédemment, à l'exception des résonateurs 1902 et de l'amplificateur faible bruit 1924 sont, dans l'exemple décrit, implémentés dans un réseau de portes programmables in situ (de l'anglais "field-programmable gate array" ou FPGA).

Par ailleurs, on remarquera que le système de lecture 1904 peut être décomposé en plusieurs dispositifs de lecture (cinq dans l'exemple décrit), chacun destiné à lire un résonateur en fournissant le signal d'excitation e(1)...e(5) respectif, et chacun comportant une boucle à phase asservie. Par exemple, le premier dispositif de lecture comporte les éléments suivants : 1924, 1926, 1930(1), 1932(1), 1934(1), 1936, 1938, 1940, 1950, 1952(1), 1906, 1908, 1912, 1914(1), 1928, 1956, 1958(1), 1960 et 1962. De la même manière que dans le système de la figure 15, les signaux d'excitation e(1)...e(5) sont additionnés dans l'additionneur 1916 pour fournir le signal d'excitation e.

Un exemple de fonctionnement du système électromécanique de mesure 1900 pour la lecture de cinq résonateurs va à présent être décrit.

Les résonateurs sont sous contrainte de sorte que leur fréquence de résonance est décalée de leur fréquence de résonance à vide.

Le système de lecture 1904 sélectionne cinq résonateurs à lire.

Le dispositif de sélection 1908 fournit les cinq fréquences de résonance à vide Fs(1)...Fs(5) des cinq résonateurs sélectionnés.

Au démarrage de la lecture, les corrections de fréquence cf(1)...cf(5) sont nulles. Ainsi, les fréquences corrigées fc(1)...fc(5) sont égales aux fréquences de résonance à vide Fs(1)...Fs(5) et le signal d'excitation e comporte les cinq fréquences de résonance à vide Fs(1)...Fs(5) des cinq résonateurs lus.

Le système de correction 1920 détermine des corrections de fréquence cf(1)....cf(5) de sorte que les fréquences corrigées fc(1)...fc(5) se rapprochent respectivement des fréquences de résonance des résonateurs lus.

Le système d'excitation 1910 fournit alors un nouveau signal d'excitation e présentant les fréquences corrigées.

La boucle est alors de nouveau parcourue jusqu'à ce que les fréquences corrigées deviennent respectivement égales ou presque égales aux fréquences de résonance des résonateurs lus. Dans l'exemple décrit, cette convergence prend moins d'une milliseconde. Ainsi, au bout d'une milliseconde, le système de lecture 1904 sélectionne cinq nouveaux résonateurs à lire. Dans l'exemple décrit, tous les résonateurs peuvent donc être lus en 10 millisecondes.

Le fait d'utiliser des informations de résonance à vide (comme les fréquences de résonance à vide ou les bandes passantes autour des fréquences de résonance à vide) permet d'accélérer la lecture en permettant de démarrer la recherche de la fréquence de résonance là où elle a le plus de chance de se trouver, c'est-à-dire autour de la fréquence de résonance à vide. Cette caractéristique présente donc des avantages par rapport à un simple balayage « quasi-continu » sur une large plage de fréquences.

En outre, les modes de réalisation à base de boucle de phase asservie avec détection « automatique » du déphasage donnant la fréquence de mesure recherchée sont intéressants car ils permettent d'augmenter de façon significative la vitesse de mesure, en particulier par rapport à un système en boucle ouverte.

En outre, l'utilisation de plusieurs dispositifs de lecture en parallèle pour paralléliser les lectures à différentes fréquences permet également d'accélérer la vitesse de lecture.

Il apparaît clairement qu'un système électromécanique de mesure tel que ceux décrits précédemment permet de réduire le nombre de dispositifs de lecture nécessaires, ainsi que la complexité des interconnexions.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, d'autres résonateurs électromécaniques que des résonateurs NEMS ou des résonateurs MEMS pourraient être utilisés.

En outre, l'initialisation d'un dispositif de lecture pour être faite, non pas à la fréquence de résonance à vide du résonateur électromécanique dont la lecture est souhaité, mais à une fréquence proche déterminée en ajoutant (ou soustrayant) un terme d'adaptation à la fréquence à vide du résonateur électromécanique. Ce terme d'adaptation tient par exemple compte d'une dérive de la fréquence de résonance à vide dans le temps, ou bien d'une dérive en température, ou bien, dans le cas de l'exemple de résonateur électromécanique décrit sur la figure 3, à la présence d'une masse supplémentaire s'ajoutant à la masse déjà présente.

En outre, les moyens de sommation pourraient être réalisés par un circuit électronique de sommation, connu en soi.

En outre, les moyens de sommation pourraient être remplacés par un commutateur recevant en entrée tous les signaux de sortie et fournissant en sortie, au ou aux dispositifs de lecture, sélectivement un ou plusieurs de ces signaux de sortie correspondant au ou aux résonateurs électromécaniques dont la lecture est souhaitée. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

En outre, bien que les exemples de dispositifs de lecture décrits précédemment soient des dispositifs en boucle fermée, ou pourrait également utiliser des dispositifs de lecture en boucle ouverte. Dans ce cas également, la connaissance des fréquences de résonance à vide enregistrées dans une mémoire permettrait de réaliser une recherche plus rapide de la fréquence de résonance des résonateurs.

**Revendications**

1. Système (1500 ; 1900) de mesure à résonateurs électromécaniques, comportant :

    - au moins deux résonateurs électromécaniques ($102_1$...$102_N$ ; 1902) présentant chacun une fréquence de résonance variant autour d'une fréquence de résonance à vide en fonction d'une grandeur physique à mesurer, chaque résonateur ($102_1$...$102_N$ ; 1902) étant muni :

        - d'une entrée ($104_1$...$104_N$) destinée à recevoir un signal d'excitation (e),
        - d'une sortie ($106_1$...$106_N$) pour fournir un signal de sortie ($s_1$...$s_N$) en réponse au signal d'excitation (e), le signal de sortie ($s_1$...$s_N$) présentant une résonance à la fréquence de résonance du résonateur ($102_1$...$102_N$ ; 1902),

    et chaque résonateur ($102_1$...$102_N$; 1902) comportant une structure mécanique définissant sa fréquence de résonance à vide, les structures mécaniques des résonateurs ($102_1$...$102_N$ ; 1902) étant différentes les unes des autres de sorte que les fréquences de résonance à vide sont différentes les unes des autres,
    - au moins un dispositif de lecture ($1502_1$...$1502_M$) connecté aux entrées des résonateurs et conçu pour fournir un signal d'excitation ($e_1$...$e_M$ ; e(1)...e(5)) sur lesdites entrées,
    - une mémoire ($120_1$...$120_M$ ; 1906) dans laquelle est enregistrée, pour chaque résonateur, une information de résonance à vide relative à la fréquence de résonance à vide du résonateur,

    chaque dispositif de lecture ($1502_1$...$1502_M$) étant destiné à déterminer la fréquence de résonance d'un ou plusieurs résonateurs sélectionnés pour lecture en configurant au moins un élément du dispositif de lecture ($1502_1$...$1502_M$)

à partir de l'information de résonance à vide mémorisée pour chaque résonateur sélectionné,

le système étant **caractérisé en ce qu'**il comporte plusieurs dispositifs de lecture ($1502_1...1502_M$) destinés à simultanément déterminer les fréquences de résonance des résonateurs sélectionnés,

**en ce qu'**il comporte en outre des moyens de sommation (1504 ; 1918) des signaux d'excitation ($e_1...e_M$ ; $e(1)...e(5)$) fournis par les dispositifs de lecture, afin de fournir un signal total d'excitation (e) aux entrées ($104_1...104_N$) des résonateurs électromécaniques ($102_1...102_N$ ; 1902), le signal total d'excitation (e) comportant une somme des signaux d'excitation ($e_1...e_M$ ; $e(1)...e(5)$),

**en ce qu'**il comporte en outre des moyens (108) de sommation des signaux de sortie ($s_1...s_N$) en un signal total de sortie (s),

**en ce que** chaque dispositif de lecture ($1502_1...1502_M$) comporte une boucle fermée ($112_1...112_M$) destinée à recevoir le signal total de sortie (s) et à fournir le signal d'excitation ($e_1...e_M$ ; $e(1)...e(5)$) en fonction du signal total de sortie (s),

**en ce que** la boucle fermée est une boucle à phase asservie ($112_1...112_M$),

en ce chaque boucle à phase asservie ($112_1...112_M$) est conçue pour caler, après démarrage de la lecture, la fréquence du signal d'excitation ($e_1...e_M$ ; $e(1)...e(5)$) sur la fréquence d'un pic de résonance du signal total de sortie (s) correspondant au résonateur sélectionné pour lecture et pour fournir, en tant que fréquence de résonance déterminée, la fréquence calée, et

**en ce que** l'information de résonance à vide propre à chaque résonateur est la fréquence de résonance à vide de ce résonateur.

2. Système selon la revendication 1, dans lequel chaque dispositif de lecture ($1502_1...1502_M$) est conçu pour déterminer la fréquence de résonance d'un seul résonateur, comporte des moyens de sélection (1508 ; 1908) de la fréquence de résonance à vide du résonateur sélectionné pour lecture, et est conçu pour fournir, au démarrage de la lecture, un signal d'excitation ($e_1...e_M$ ; $e(1)...e(5)$) monofréquentiel de fréquence égale à la fréquence de résonance à vide sélectionnée.

3. Système selon la revendication 1 ou 2, dans lequel chaque circuit à boucle de phase asservie ($112_1...112_M$) comporte des moyens ($124_1...124_M$ ; 1914(1)...1914(5)) de démarrage du calage à la fréquence de résonance à vide sélectionnée.

4. Système (1800) de mesure à résonateurs électromécaniques, comportant :

- au moins deux résonateurs électromécaniques ($102_1...102_N$) présentant chacun une fréquence de résonance variant autour d'une fréquence de résonance à vide en fonction d'une grandeur physique à mesurer, chaque résonateur ($102_1...102_N$) étant muni :

- d'une entrée ($104_1...104_N$) destinée à recevoir un signal d'excitation (e),
- d'une sortie ($106_1...106_N$) pour fournir un signal de sortie ($s_1...s_N$) en réponse au signal d'excitation (e), le signal de sortie ($s_1...s_N$) présentant une résonance à la fréquence de résonance du résonateur ($102_1...102_N$ ; 1902),

et chaque résonateur ($102_1...102_N$) comportant une structure mécanique définissant sa fréquence de résonance à vide, les structures mécaniques des résonateurs ($102_1...102_N$) étant différentes les unes des autres de sorte que les fréquences de résonance à vide sont différentes les unes des autres,
- au moins un dispositif de lecture connecté aux entrées des résonateurs et conçu pour fournir un signal d'excitation ($s^*_1...s^*_M$) sur lesdites entrées,
- une mémoire dans laquelle est enregistrée, pour chaque résonateur, une information de résonance à vide relative à la fréquence de résonance à vide du résonateur,

chaque dispositif de lecture étant destiné à déterminer la fréquence de résonance d'un ou plusieurs résonateurs sélectionnés pour lecture en configurant au moins un élément du dispositif de lecture à partir de l'information de résonance à vide mémorisée pour chaque résonateur sélectionné,

le système étant **caractérisé en ce qu'**il comporte plusieurs dispositifs de lecture destinés à simultanément déterminer les fréquences de résonance des résonateurs sélectionnés,

**en ce qu'**il comporte en outre des moyens de sommation (1808, 1810) des signaux d'excitation ($s^*_1...s^*_M$) fournis par les dispositifs de lecture, afin de fournir un signal total d'excitation (e) aux entrées ($104_1...104_N$) des résonateurs électromécaniques ($102_1...102_N$), le signal total d'excitation (e) comportant une somme des signaux d'excitation ($s^*_1...s^*_M$),

**en ce qu'**il comporte en outre des moyens (108) de sommation des signaux de sortie ($s_1...s_N$) en un signal total de sortie (s),

**en ce que** chaque dispositif de lecture comporte une boucle fermée destinée à recevoir le signal total de sortie (s) et à fournir le signal d'excitation ($s*_1...s*_M$) en fonction du signal total de sortie (s),

**en ce que** la boucle fermée est une boucle d'auto-oscillation, et

**en ce que**, pour chaque résonateur, l'information de résonance à vide est une bande passante s'étendant autour de la fréquence de résonance à vide, et

**en ce que** chaque boucle d'auto-oscillation (1803) comporte un démultiplexeur (1804) destiné à extraire, du signal total de sortie (s), chacun des signaux de sortie ($s_1...s_M$) des résonateurs sélectionnés pour lecture, l'extraction étant réalisée, pour chaque résonateur sélectionné pour lecture, dans la bande passante propre à ce résonateur.

5. Système selon l'une quelconque des revendications 1 à 4, dans lequel, pour chaque résonateur électromécanique ($102_1...102_N$ ; 1902), l'entrée ($104_1...104_N$) et la sortie ($106_1...106_N$) sont différentes.

6. Système selon l'une quelconque des revendications 1 à 5, dans lequel chaque dispositif de lecture ($1502_1...1502_M$) est conçu pour déterminer, à partir du signal total de sortie (s), la fréquence de résonance d'un seul résonateur ($102_1...102_N$ ; 1902) sélectionné.

7. Système selon la revendication 6, dans lequel chaque dispositif de lecture ($1502_1...1502_M$) est conçu pour successivement déterminer, à partir du signal total de sortie (s), la fréquence de résonance de plusieurs résonateurs ($102_1...102_N$ ; 1902) sélectionnés.

8. Système selon l'une quelconque des revendications 1 à 7, dans lequel les moyens de sommation (108) comportent un nœud auquel les sorties ($106_1...106_N$) des résonateurs ($102_1...102_N$ ; 1902) sont connectées.

9. Système selon l'une des revendications 1 à 8, dans lequel les résonateurs électromécaniques ($102_1...102_N$ ; 1902) sont des résonateurs MEMS ou bien des résonateurs NEMS.

10. Système selon la revendication 9, dans lequel les résonateurs électromécaniques ($102_1...102_N$ ; 1902) sont des résonateurs NEMS ($102_1...102_N$) gravés sur une même puce de silicium (202).

11. Procédé de fabrication d'un système selon l'une quelconque des revendications 1 à 10, comportant, pour le dimensionnement des résonateurs électromécaniques ($102_1...102_N$ ; 1902) :

   - déterminer, pour chaque résonateur, un intervalle de variation maximale attendue de sa fréquence de résonance autour de sa fréquence de résonance à vide, et
   - choisir des structures mécaniques des résonateurs définissant des fréquences de résonance à vide suffisamment écartées les unes des autres pour que les intervalles déterminés ne se chevauchent pas.

12. Procédé de lecture d'au moins deux résonateurs électromécaniques ($102_1...102_N$ ; 1902) d'un système selon l'une quelconque des revendications 1 à 10, comportant :

   - sélectionner, parmi les résonateurs ($102_1...102_N$ ; 1902), plusieurs résonateurs à lire,
   - récupérer, dans ladite mémoire, l'information de résonance à vide de chaque résonateur sélectionné pour lecture,
   - appliquer un signal total d'excitation (e) au moyen des boucles fermées ($112_1...112_M$; 1803) et des moyens de sommation (1504 ; 1918) des signaux d'excitation aux résonateurs et déterminer la fréquence de résonance de chaque résonateur sélectionné pour lecture en configurant au moins un élément du dispositif de lecture à partir de l'information de résonance à vide de ce résonateur,
   - déterminer, pour chaque résonateur sélectionné, la grandeur physique à partir de la fréquence de résonance déterminée et de la fréquence de résonance à vide du résonateur.

13. Procédé selon la revendication 12, comportant en outre, avant de sélectionner plusieurs résonateurs à lire, une opération de calibration comportant :

   - déterminer les fréquences de résonance à vide des résonateurs ($102_1...102_N$; 1902),
   - pour chaque résonateur, déterminer l'information de résonance à vide de ce résonateur à partir de sa fréquence de résonance à vide,

- enregistrer les informations de résonance à vide déterminées dans ladite mémoire ($120_1$...$120_M$ ; 1906).

**Patentansprüche**

1. Messsystem (1500; 1900) mit elektromechanischen Resonatoren, Folgendes beinhaltend:

   - mindestens zwei elektromechanische Resonatoren ($102_1$...$102_N$; 1902), die jeweils eine Resonanzfrequenz aufweisen, die in Abhängigkeit von einer zu messenden physikalischen Größe um eine Leerresonanzfrequenz herum variieren, wobei jeder Resonator ($102_1$... $102_N$; 1902) versehen ist:

     - mit einem Eingang ($104_1$... $104_N$), der dazu bestimmt ist, ein Anregungssignal (e) zu empfangen,
     - mit einem Ausgang ($106_1$...$106_N$) zum Bereitstellen eines Ausgangssignals ($s_1$...$s_N$) als Reaktion auf das Anregungssignal (e), wobei das Ausgangssignal ($s_1$...$s_N$) eine Resonanz auf der Resonanzfrequenz des Resonators ($102_1$... $102_N$; 1902) aufweist,

     und jeder Resonator ($102_1$... $102_N$; 1902) eine mechanische Struktur beinhaltet, die seine Leerresonanzfrequenz definiert, wobei sich die mechanischen Strukturen der Resonatoren ($102_1$... $102_N$; 1902) voneinander unterscheiden, sodass sich die Leerresonanzfrequenzen voneinander unterscheiden,
     - mindestens eine Lesevorrichtung ($1502_1$...$1502_M$), die mit den Eingängen der Resonatoren verbunden ist, und gestaltet ist, um ein Anregungssignal ($e_1$...$e_M$; e(1)...e(5)) an den Eingängen bereitzustellen,
     - einen Speicher ($120_1$... $120_M$; 1906), in dem für jeden Resonator eine Leerresonanzinformation in Bezug auf die Leerresonanzfrequenz des Resonators gespeichert ist,

   wobei jede Lesevorrichtung ($1502_1$...$1502_M$) dazu bestimmt ist, die Resonanzfrequenz eines oder mehrerer ausgewählter Resonatoren zum Lesen durch Konfigurieren mindestens eines Elements der Lesevorrichtung ($1502_1$...$1502_M$) aus der gespeicherten Leerresonanzinformation für jeden ausgewählten Resonator zu bestimmen, wobei das System **dadurch gekennzeichnet ist, dass** es mehrere Lesevorrichtungen ($1502_1$...$1502_M$) beinhaltet, die dazu bestimmt sind, zugleich die Resonanzfrequenzen der ausgewählten Resonatoren zu bestimmen,
   dadurch, dass es weiter Summierungsmittel (1504; 1918) der Anregungssignale ($e_1$...$e_M$; e(1)...e(5)) beinhaltet, die von den Lesevorrichtungen bereitgestellt werden, um den Eingängen ($104_1$...$104_N$) der elektromechanischen Resonatoren ($102_1$... $102_N$; 1902) ein Gesamt-Anregungssignal (e) bereitzustellen, wobei das Gesamt-Anregungssignal (e) eine Summe der Anregungssignale ($e_1$...$e_M$; e(1)...e(5)) beinhaltet,
   dadurch, dass es weiter Summierungsmittel (108) der Ausgangssignale ($s_1$...$s_N$) in ein Gesamt-Ausgangssignal (s) beinhaltet,
   dadurch, dass jede Lesevorrichtung ($1502_1$...$1502_M$) eine geschlossene Regelschleife ($112_1$... $112_M$) beinhaltet, die dazu bestimmt ist, das Gesamt-Ausgangssignal (s) zu empfangen, und in Abhängigkeit von dem Gesamt-Ausgangssignal (s) das Anregungssignal ($e_1$...$e_M$; e(1)...e(5)) bereitzustellen,
   dadurch, dass die geschlossene Regelschleife eine Phasenregelschleife ($112_1$...$112_M$) ist,
   dadurch, dass jede Phasenregelschleife ($112_1$...$112_M$) gestaltet ist, um nach dem Starten des Lesens die Frequenz des Anregungssignals ($e_1$...$e_M$; e(1)...e(5)) auf die Frequenz einer Resonanzspitze des Gesamt-Ausgangssignals (s) entsprechend dem zum Lesen ausgewählten Resonator zu blockieren, und um die blockierte Frequenz als bestimmte Resonanzfrequenz bereitzustellen, und
   dadurch, dass die jedem Resonator eigene Leerresonanzinformation die Leerresonanzfrequenz dieses Resonators ist.

2. System nach Anspruch 1, wobei jede Lesevorrichtung ($1502_1$...$1502_M$) gestaltet ist, um die Resonanzfrequenz eines einzigen Resonators zu bestimmen, Auswahlmittel (1508; 1908) für die Leerresonanzfrequenz des zum Lesen ausgewählten Resonators beinhaltet, und gestaltet ist, um zu Beginn des Lesens ein monofrequentes Anregungssignal ($e_1$...$e_M$; e(1)...e(5)) einer Frequenz gleich der ausgewählten Leerresonanzfrequenz bereitzustellen.

3. System nach Anspruch 1 oder 2, wobei jede Phasenregelschleife ($112_1$...$112_M$) Mittel ($124_1$...$124_M$; 1914(1) ...1914(5)) zum Starten des Blockierens auf die ausgewählte Leerresonanzfrequenz beinhaltet.

4. Messsystem (1800) mit elektromechanischen Resonatoren, Folgendes beinhaltend:

   - mindestens zwei elektromechanische Resonatoren ($102_1$... $102_N$), die jeweils eine Resonanzfrequenz aufweisen, die in Abhängigkeit von einer zu messenden physikalischen Größe um eine Leerresonanzfrequenz herum variieren, wobei jeder Resonator ($102_1$...$102_N$) versehen ist:

- mit einem Eingang ($104_1$ ... $104_N$), der dazu bestimmt ist, ein Anregungssignal (e) zu empfangen,
- mit einem Ausgang ($106_1$...$106_N$) zum Bereitstellen eines Ausgangssignals ($s_1$...$s_N$) als Reaktion auf das Anregungssignal (e), wobei das Ausgangssignal ($s_1$...$s_N$) eine Resonanz auf der Resonanzfrequenz des Resonators ($102_1$... $102_N$; 1902) aufweist,

und jeder Resonator ($102_1$...$102_N$) eine mechanische Struktur beinhaltet, die seine Leerresonanzfrequenz definiert, wobei sich die mechanischen Strukturen der Resonatoren ($102_1$...$102_N$) voneinander unterscheiden, sodass sich die Leerresonanzfrequenzen voneinander unterscheiden,
- mindestens eine Lesevorrichtung, die mit den Eingängen der Resonatoren verbunden ist, und gestaltet ist, um ein Anregungssignal ($s^*_1$...$s^*_M$) an den Eingängen bereitzustellen,
- einen Speicher, in dem für jeden Resonator eine Leerresonanzinformation in Bezug auf die Leerresonanzfrequenz des Resonators gespeichert ist,

wobei jede Lesevorrichtung dazu bestimmt ist, die Resonanzfrequenz eines oder mehrerer ausgewählter Resonatoren zum Lesen durch Konfigurieren mindestens eines Elements der Lesevorrichtung aus der gespeicherten Leerresonanzinformation für jeden ausgewählten Resonator zu bestimmen,
wobei das System **dadurch gekennzeichnet ist, dass** es mehrere Lesevorrichtungen beinhaltet, die dazu bestimmt sind, zugleich die Resonanzfrequenzen der ausgewählten Resonatoren zu bestimmen,
dadurch, dass es weiter Summierungsmittel (1808, 1810) der Anregungssignale ($s^*_1$...$s^*_M$) beinhaltet, die von den Lesevorrichtungen bereitgestellt werden, um den Eingängen ($104_1$...$104_N$) der elektromechanischen Resonatoren ($102_1$...$102_N$) ein Gesamt-Anregungssignal (e) bereitzustellen, wobei das Gesamt-Anregungssignal (e) eine Summe der Anregungssignale ($s^*_1$...$s^*_M$) beinhaltet, dadurch, dass es weiter Summierungsmittel (108) der Ausgangssignale ($s_1$...$s_N$) in ein Gesamt-Ausgangssignal (s) beinhaltet,
dadurch, dass jede Lesevorrichtung eine geschlossene Regelschleife beinhaltet, die dazu bestimmt ist, das Gesamt-Ausgangssignal (s) zu empfangen, und das Anregungssignal ($s^*_1$...$s^*_M$) in Abhängigkeit von dem Gesamt-Ausgangssignal (s) bereitzustellen,
dadurch, dass die geschlossene Regelschleife eine Eigenschwingungsschleife ist, und
dadurch, dass die Leerresonanzinformation für jeden Resonator eine Bandbreite ist, die sich um die Leerresonanzfrequenz herum erstreckt, und
dadurch, dass jede Eigenschwingungsschleife (1803) einen Demultiplexer (1804) beinhaltet, der dazu bestimmt ist, um aus dem Gesamt-Ausgangssignal (s) jedes der Ausgangssignale ($s_1$...$s_M$) der zum Lesen ausgewählten Resonatoren zu extrahieren, wobei das Extrahieren für jeden zum Lesen ausgewählten Resonator in einer Bandbreite realisiert wird, die diesem Resonator eigen ist.

5. System nach einem der Ansprüche 1 bis 4, wobei der Eingang ($104_1$...$104_N$) und der Ausgang ($106_1$...$106_N$) für jeden elektromechanischen Resonator ($102_1$...$102_N$; 1902) unterschiedlich sind.

6. System nach einem der Ansprüche 1 bis 5, wobei jede Lesevorrichtung ($1502_1$...$1502_M$) gestaltet ist, um aus dem Gesamt-Ausgangssignal (s) die Resonanzfrequenz eines einzigen ausgewählten Resonators ($102_1$...$102_N$; 1902) zu bestimmen.

7. System nach Anspruch 6, wobei jede Lesevorrichtung ($1502_1$...$1502_M$) gestaltet ist, um nacheinander aus dem Gesamt-Ausgangssignal (s) die Resonanzfrequenz mehrerer ausgewählter Resonatoren ($102_1$... $102_N$; 1902) zu bestimmen.

8. System nach einem der Ansprüche 1 bis 7, wobei die Summierungsmittel (108) einen Knoten beinhalten mit dem die Ausgänge ($106_1$...$106_N$) der Resonatoren ($102_1$...$102_N$; 1902) verbunden sind.

9. System nach einem der Ansprüche 1 bis 8, wobei die elektromechanischen Resonatoren ($102_1$...$102_N$; 1902) MEMS oder aber NEMS Resonatoren sind.

10. System nach Anspruch 9, wobei die elektromechanischen Resonatoren ($102_1$...$102_N$; 1902) NEMS Resonatoren ($102_1$...$102_N$) sind, die auf einen selben Silicium-Chip (202) graviert sind.

11. Verfahren zum Herstellen eines Systems nach einem der Ansprüche 1 bis 10, das für die Bemessung der elektromechanischen Resonatoren ($102_1$...$102_N$; 1902) Folgendes beinhaltet:

- Bestimmen für jeden Resonator eines maximalen erwarteten Variationsintervalls seiner Resonanzfrequenz um seine Leerresonanzfrequenz herum, und
- Auswählen der mechanischen Strukturen der Resonatoren, die Leerresonanzfrequenzen definieren, die ausreichend voneinander entfernt sind, damit sich die bestimmten Intervalle nicht überschneiden.

12. Leseverfahren mindestens zweier elektromechanischer Resonatoren ($102_1$...$102_N$; 1902) eines Systems nach einem der Ansprüche 1 bis 10, Folgendes beinhaltend:

- Auswählen mehrerer zu lesender Resonatoren aus den Resonatoren ($102_1$...$102_N$; 1902),
- Erheben der Leerresonanzinformation jedes zum Lesen ausgewählten Resonators in dem Speicher,
- Anwenden eines Gesamt-Anregungssignals (e) anhand geschlossener Regelschleifen ($112_1$...$112_M$; 1803) und der Summierungsmittel (1504; 1918) der Anregungssignale auf die Resonatoren und Bestimmen der Resonanzfrequenz jedes zum Lesen ausgewählten Resonators durch Konfigurieren mindestens eines Elements der Lesevorrichtung aus der Leerresonanzinformation dieses Resonators,
- Bestimmen für jeden ausgewählten Resonator der physikalischen Größe aus der bestimmten Resonanzfrequenz und der Leerresonanzfrequenz des Resonators.

13. Verfahren nach Anspruch 12, das vor dem Auswählen mehrerer zu lesender Resonatoren weiter einen Kalibrierungsvorgang beinhaltet, der Folgendes beinhaltet:

- Bestimmen der Leerresonanzfrequenzen der Resonatoren ($102_1$...$102_N$; 1902),
- für jeden Resonator Bestimmen der Leerresonanzinformation dieses Resonators aus seiner Leerresonanzfrequenz,
- Speichern der bestimmten Leerresonanzinformationen in dem Speicher ($120_1$...$120_M$; 1906).


**Claims**

1. Measuring system (1500; 1900) having electromechanical resonators, comprising:

- at least two electromechanical resonators ($102_1$...$102_N$; 1902) each having a resonant frequency varying around an offload resonant frequency according to a physical quantity to be measured, each resonator ($102_1$...$102_N$; 1902) being provided with:

  - an input ($104_1$...$104_N$) intended to receive an excitation signal (e),
  - an output ($106_1$...$106_N$) for supplying an output signal ($s_1$...$s_N$) in response to the excitation signal (e), the output signal ($s_1$...$s_N$) having resonance at the resonant frequency of the resonator ($102_1$...$102_N$; 1902),

  and each resonator ($102_1$...$102_N$; 1902) comprising a mechanical structure defining its offload resonant frequency, the mechanical structures of the resonators ($102_1$...$102_N$; 1902) being different from one another so that the offload resonant frequencies are different from one another,
- at least one reading device ($1502_1$...$1502_M$) connected to the inputs of the resonators and designed to supply an excitation signal ($e_1$...$e_M$; e(1)...e(5)) on said inputs,
- a memory ($120_1$...$120_M$; 1906) wherein there is recorded, for each resonator, offload resonance information relating to the offload resonant frequency of the resonator,

each reading device ($1502_1$...$1502_M$) being intended to determine the resonant frequency of one or more resonators selected for reading by configuring at least one element of the reading device ($1502_1$...$1502_M$) from the offload resonance information stored for each selected resonator,
wherein the system is **characterized in that** it comprises several reading devices ($1502_1$...$1502_M$) intended to simultaneously determine the resonant frequencies of the selected resonators,
**in that** it further comprises means (1504; 1918) for adding the excitation signals ($e_1$...$e_M$; e(1)...e(5)) supplied by the reading devices, in order to supply a total excitation signal (e) at the inputs ($104_1$...$104_N$) of the electromechanical resonators ($102_1$...$102_N$; 1902), the total excitation signal (e) comprising a sum of the excitation signals ($e_1$...$e_M$; e(1)...e(5)),
**in that** it further comprises means (108) for adding the output signals ($s_1$...$s_N$) as a total output signal (s),
**in that** each reading device ($1502_1$...$1502_M$) comprises a closed loop ($112_1$...$112_M$) intended to receive the total output signal (s) and to supply the excitation signal ($e_1$...$e_M$; e(1)...e(5)) as a function of the total output signal (s),

**in that** the closed loop is a controlled phase loop ($112_1...112_M$),
**in that** each controlled phase loop ($112_1...112_M$) is designed to fix, after starting the reading, the frequency of the excitation signal ($e_1...e_M$; e(1)...e(5)) on the frequency of a resonance peak of the total output signal (s) corresponding to the resonator selected for reading and to supply the fixed frequency as the determined resonant frequency, and
**in that** the offload resonance information particular to each resonator is the offload resonant frequency of this resonator.

2. System according to claim 1, wherein each reading device ($1502_1...1502_M$) is designed to determine the resonant frequency of a single resonator, comprises means for selecting (1508; 1908) the offload resonant frequency of the resonator selected for reading, and is designed to supply, at the start of reading, a single-frequency excitation signal (e; $e_1...e_M$; e(1)...e(5)) with a frequency equal to the selected offload resonant frequency.

3. System according to claim 1 or 2, wherein each controlled phase loop circuit ($112_1...112_M$) comprises means ($124_1...124_M$; 1914(1)...1914(5)) for starting the fixing at the selected offload resonant frequency.

4. Measuring system (1800) having electromechanical resonators, comprising:

   - at least two electromechanical resonators ($102_1...102_N$) each having a resonant frequency varying around an offload resonant frequency according to a physical quantity to be measured, each resonator ($102_1...102_N$) being provided with:

     - an input ($104_1...104_N$) intended to receive an excitation signal (e),
     - an output ($106_1...106_N$) for supplying an output signal ($s_1...s_N$) in response to the excitation signal (e), the output signal ($s_1...s_N$) having resonance at the resonant frequency of the resonator ($102_1...102_N$; 1902),

   and each resonator ($102_1...102_N$) comprising a mechanical structure defining its offload resonant frequency, the mechanical structures of the resonators ($102_1...102_N$) being different from one another so that the offload resonant frequencies are different from one another,
   - at least one reading device connected to the inputs of the resonators and designed to supply an excitation signal ($s^*_1...s^*_M$) on said inputs,
   - a memory wherein there is recorded, for each resonator, offload resonance information relating to the offload resonant frequency of the resonator,

   each reading device being intended to determine the resonant frequency of one or more resonators selected for reading by configuring at least one element of the reading device from the offload resonance information stored for each selected resonator, wherein the system is **characterized in that** it comprises several reading devices intended to simultaneously determine the resonant frequencies of the selected resonators,
   **in that** it further comprises means (1808; 1810) for adding the excitation signals ($s^*_1...s^*_M$) supplied by the reading devices, in order to supply a total excitation signal (e) at the inputs ($104_1...104_N$) of the electromechanical resonators ($102_1...102_N$), the total excitation signal (e) comprising a sum of the excitation signals ($s^*_1...s^*_M$),
   **in that** it further comprises means (108) for adding the output signals ($s_1...s_N$) as a total output signal (s),
   **in that** each reading device comprises a closed loop intended to receive the total output signal (s) and to supply the excitation signal ($s^*_1...s^*_M$) as a function of the total output signal (s),
   **in that** the closed loop is an auto-oscillation loop, and
   **in that**, for each resonator, the offload resonance information is a bandwidth extending around the offload resonant frequency, and
   **in that** each auto-oscillation loop (1803) comprises a demultiplexer (1804) intended to extract, from the total output signal (s), each of the output signals ($s_1...s_M$) of the resonators selected for reading, the extraction being performed, for each resonator selected for reading, in the bandwidth particular to this resonator.

5. System according to any of claims 1 to 4, wherein, for each electromechanical resonator ($102_1...102_N$; 1902), the input ($104_1...104_N$) and the output ($106_1...106_N$) are different.

6. System according to any of claims 1 to 5, wherein each reading device ($1502_1...1502_M$) is designed to determine, from the total output signal (s), the resonant frequency of a single selected resonator ($102_1...102_N$; 1902).

7. System according to claim 6, wherein each reading device ($1502_1...1502_M$) is designed to successively determine, from the total output signal (s), the resonant frequency of several selected resonators ($102_1...102_N$; 1902).

8. System according to any of claims 1 to 7, wherein the adding means (108) comprise a node to which the outputs ($106_1...106_N$) of the resonators ($102_1...102_N$; 1902) are connected.

9. System according to any of claims 1 to 8, wherein the electromechanical resonators ($102_1...102_N$; 1902) are MEMS resonators or NEMS resonators.

10. System according to claim 9, wherein the electromechanical resonators ($102_1...102_N$; 1902) are NEMS resonators ($102_1...102_N$) etched on the same silicon chip (202).

11. Method for manufacturing a system according to any of claims 1 to 10, comprising, for sizing the electromechanical resonators ($102_1...102_N$; 1902):

    - determining, for each resonator, an expected maximum variation range of its resonant frequency around its offload resonant frequency, and
    - choosing mechanical structures of the resonators defining offload resonant frequencies sufficiently separate from one another for the determined intervals not to overlap.

12. Method for reading at least two electromechanical resonators ($102_1...102_N$; 1902) of a system according to any of claims 1 to 10, comprising:

    - selecting, from the resonators ($102_1...102_N$; 1902), several resonators to be read,
    - recovering, in said memory, the offload resonance information of each resonator selected for reading,
    - applying a total excitation signal (e) to the resonators using the closed loops ($112_1...112_M$; 1803) and the means (1504; 1918) for adding the excitation signals and determining the resonant frequency of each resonator selected for reading by configuring at least one element of the reading device from the offload resonance information of this resonator,
    - determining, for each selected resonator, the physical quantity from the resonant frequency determined and the offload resonant frequency of the resonator.

13. Method according to claim 12, further comprising, before selecting several resonators to be read, a calibration operation comprising:

    - determining the offload resonant frequencies of the resonators ($102_1...102_N$: 1902),
    - for each resonator, determining the offload resonance information of this resonator from its offload resonant frequency,

        - recording the offload resonance information determined in said memory ($120_1...120_M$; 1906).

## Figure 1

## Figure 2

## _Figure 3_

## _Figure 4_

## Figure 5

## Figure 6

## Figure 7

## Figure 8

## Figure 9

Bode Diagram

## Figure 10

## Figure 11

## Figure 12

## Figure 13

## Figure 14

## Figure 15

## Figure 16

## Figure 17

## _Figure 18_

## Figure 19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2942681 A1
- US 2002026224 A1
- US 2009199638 A1

**Littérature non-brevet citée dans la description**

- **NAIK.** Towards single-molecule nanomechanical mass spectrometry. *Nature Nanotechnologie,* 21 Juin 2009
- **DAGAMSEH et al.** Towards high-resolution flow cameras made of artificial hair flow-sensor for flow patern recognition. *2011 IEEE 24th International conférence on micro electro mechnical systems,* 01 Janvier 2011, 648-651